Europäisches Patentamt

European Patent Office

Office européen des brevets

(11) Veröffentlichungsnummer: **0 343 366**
**A1**

## (12) EUROPÄISCHE PATENTANMELDUNG

(21) Anmeldenummer: 89106788.6

(51) Int. Cl.⁴: **G01B 11/24**

(22) Anmeldetag: 15.04.89

(30) Priorität: 24.05.88 DE 3817559

(43) Veröffentlichungstag der Anmeldung:
**29.11.89 Patentblatt 89/48**

(84) Benannte Vertragsstaaten:
**AT BE CH DE ES FR GB GR IT LI LU NL SE**

(71) Anmelder: **FRAUNHOFER-GESELLSCHAFT ZUR FÖRDERUNG DER ANGEWANDTEN FORSCHUNG E.V.**
**Leonrodstrasse 54**
**D-8000 München 19(DE)**

(72) Erfinder: **Berger, Christa**
**Hansjakobstrasse 8**
**D-7800 Freiburg(DE)**
Erfinder: **Höfler, Heinrich, Dr.**
**Hans-Sachs-Strasse 37**
**D-7835 Teningen(DE)**
Erfinder: **Fichter, Otmar**
**Im Gängler 3**
**D-7806 March 2(DE)**

(74) Vertreter: **Rackette, Karl, Dipl.-Phys. Dr.-Ing**
**Kaiser-Joseph-Strasse 179 Postfach 1310**
**D-7800 Freiburg(DE)**

(54) **Kamera.**

(57) Eine Kamera zur Erfassung der Topographie einer Prüflingsoberfläche durch Erzeugen eines Moiré-Bildes mit Hilfe eines auf dem Objekt aufgebrachten Objektgitters verfügt über einen CCD-Sensor mit einem Referenzgitter (8), das unmittelbar auf die Lichteintrittsfläche (4) des CCD-Sensors als physikalische Gitterstruktur aufgebracht ist.

EP 0 343 366 A1

Fig. 1

**Die Erfindung betrifft eine Kamera zur Erfassung einer Prüflingsoberfläche gemäß dem Oberbegriff des Anspruchs 1.**

Moiré-Verfahren beruhen darauf, daß auf optischem Wege zwei regelmäßige Strukturen wie Liniengitter mit etwa gleich großen Gitterkonstanten zur Überlagerung gebracht werden. Das auf den Prüfling aufgebrachte oder aufprojizierte Objektgitter wird auf ein Referenzgitter abgebildet. Deformationen des Objektgitters durch topographische Eigenschaften ergeben in der Ebene des Referenzgitters charakteristische Moiré-Linien.

Aus IBM Technical Disclosure Bulletin Vol. 25 No. 1, Seiten 357-358 (1982) ist bekannt, das auf dem Prüfling befindliche Objektgitter auf ein körperliches Gitter abzubilden. Die in dieser Bildebene entstehenden Moiré-Linien werden mit Hilfe einer zweiten Abbildung durch eine CCD-Empfängerkamera aufgenommen. Diese zweite Abbildung der Moiré-Linien könnte auch durch eine beliebige andere Kamera oder auf einen photographischen Film erfolgen.

Die zweite Abbildung bringt erhebliche Intensitätsverluste mit sich, die eine sehr hohe Beleuchtungsstärke am Objekt verlangen. Dies ist gerade bei großflächigen Prüflingen nur sehr schwer oder aufwendig und teuer zu realisieren, so daß der Stand der Technik nur kleinflächige Prüflinge oder eine geringe Auflösung gestattet.

Einen Ausweg bietet die direkte Verwendung eines CCD-Bildaufnahmesensors als Referenzgitter. Die Zeilen-oder Spaltenstruktur der Sensormatrix kann direkt als Gitterstruktur eines Referenzgitters benutzt werden. Die entstehenden Moiré-Bilder sind zwar nicht mit Intensitätsverlusten behaftet, so daß eine große Prüfoberfläche betrachtet werden kann, aber sie lassen nur eine geringe Auflösung zu, die durch die geringe Anzahl der Zeilen/Spalten bei CCD-Bildaufnahmesensoren hervorgerufen wird. Solche CCD-Sensoren ermöglichen einige hundert Linien. Eine Zusammenschaltung von mehreren CCD-Bildaufnahmesensoren erhöht zwar die Linienzahl des Referenzgitters, erfordert aber einen technisch erheblich aufwendigeren und langsameren Auslesevorgang des gewonnenen Bildes.

Ausgehend von diesem Stand der Technik liegt der Erfindung die Aufgabe zugrunde, eine Kamera der eingangs genannten Art zu schaffen, die ein hohes Auflösungsvermögen sowie ein großes Gesichtsfeld hat.

Diese Aufgabe wird erfindungsgemäß durch die Merkmale des kennzeichnenden Teils des Hauptanspruchs gelöst.

Durch das Aufbringen des Referenzgitters als zusätzliche physikalische Gitterstruktur direkt in der Bildebene, in der die Moiré-Linien zur Verarbeitung aufgenommen werden, sind die einzigen zusätzlichen Intensitätsverluste diejenigen, die durch den nichttransparenten Teil des aufgebrachten Gitters hervorgerufen werden. Bei einem 1 : 1 - Rechtekkamplitudengitter beträgt die Lichtdämpfung also nur 50 %. Durch eine technisch in Dünnschichtprozessen mögliche Gitterkonstante von wenigen Mikrometern erhöht sich die Anzahl der an der Erzeugung der Moiré-Struktur be teiligten Gitterlinien von wenigen Hundert auf mehrere Tausend Linien. Eine obere Grenze der nutzbaren Linienzahl liegt dann nur noch in der Qualität des verwendeten CCD-Kameraobjektivs.

Bei einem vorteilhaften Ausführungsbeispiel der Erfindung erfolgt eine Verwendung eines Bildleiters auf der Bildebene eines üblichen CCD-Bildaufnahmesensors in der Weise, daß die Eintrittsebene des Bildleiters in der Bildebene des abgebildeten Objektgitters zu liegen kommt. Ein Aufbringen des Referenzgitters auf die Eintrittsebene des Bildleiters bringt die oben genannten Vorteile bei gleichzeitiger Herauslösung des CCD-Bildaufnahmesensor-Chips aus dem Fertigungsprozeß des Referenzgitters mit sich, in dem dann nur der technisch einfacher zu handhabende Bildleiter beschichtet und strukturiert wird.

Weitere Ausgestaltungen der Erfindung sind Gegenstand der Unteransprüche.

Nachfolgend werden Ausführungsbeispiele der Erfindung anhand der Zeichnung näher erläutert. Es zeigen:

Fig. 1 eine schematische, perspektivische Ansicht eines Ausschnitts des CCD-Bildaufnahmesensors gemäß einem ersten Ausführungsbeispiels der Erfindung,

Fig. 2 eine perspektivische Ansicht einer CCD-Kamera mit einem CCD-Bildaufnahmesensor gemäß der Erfindung und

Fig. 3 eine perspektivische Ansicht auf einen Ausschnitt eines Bildleiters für einen CCD-Bildaufnahmesensor entsprechend einem zweiten Ausführungsbeispiel der Erfindung.

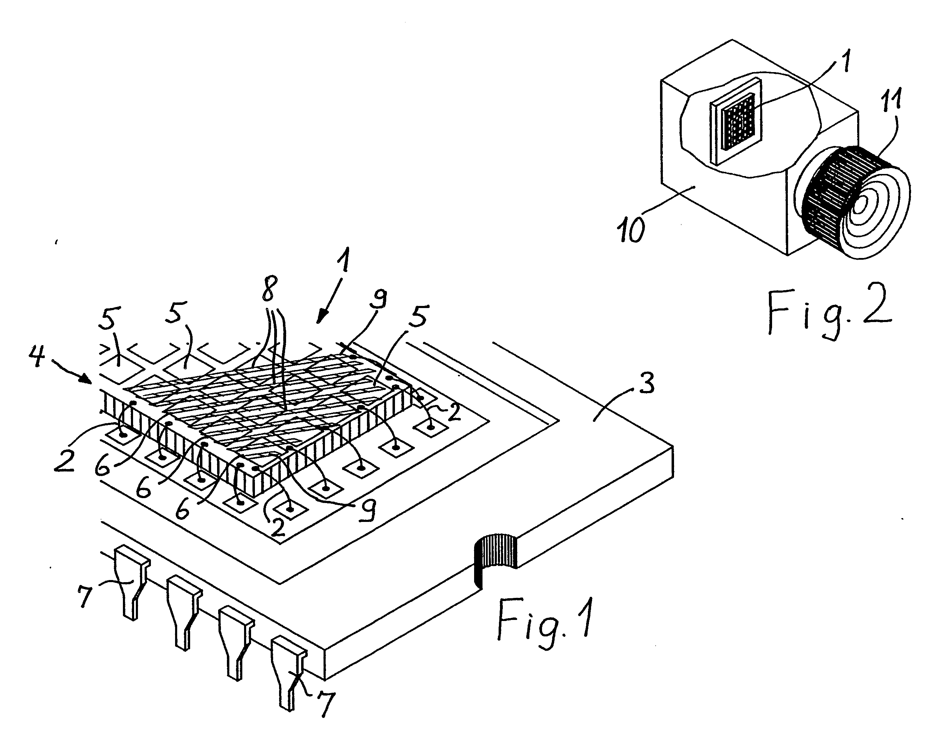

Fig. 1 zeigt in perspektivischer Ansicht einen Ausschnitt eines ersten Ausführungsbeispiels der Erfindung. Schematisch gezeichnet ist eine ladungsgekoppelte Lichtdetektormatrix, die nachfolgend kurz als CCD-Bildaufnahmesensor 1 bezeichnet ist, der über Verbindungsdrähte 2 mit einer Trägerplatte 3 verbunden ist. Der CCD-Bildaufnahmesensor 1 ist in seiner Bildebene 4 aus Bildpunkten 5 in Zeilen und Spalten 6 aufgebaut, wobei zur Übersichtlichkeit der Fig. 1 nur vier Spalten 6 gezeichnet sind. Der CCD-Bildaufnahmesensor weist wie üblich jeweils einige Hundert Zeilen und Spalten 6 auf.

Das mit Hilfe der Bildpunkte 5 aufgenommene Bild wird über Kontaktfüße 7 an eine Bildverarbeitungsschaltung übergeben, bei der die Spalten 6 des Bildaufnahmesensors 1 in einem Projektions-Moiré-Verfahren, beispielsweise in einem Projektions-Moiré-Verfahren zur großflächigen Topographiemessung eines Prüflings, ein Gitter bilden, wobei das Objektgitter sich auf der Prüflingsoberfläche befindet.

Wie Fig. 1 schematisch zeigt, ist auf der Bildebene 4 direkt ein Referenzgitter 8 aus abwechselnd transparenten und nichttransparenten Streifen aufgebracht. Eine vorteilhafte Technik zum Aufbringen eines Referenzgitters 8 in Gestalt eines Rechteckamplitudengitters auf die übliche $SiO_2$-Schutzschicht des CCD-Bildaufnahmesensors 1 in der Bildebene 4 besteht in der Anwendung von Dünnschichtprozessen - wie zum Beispiel Aufdampfen oder Sputtern - und anschließender photolithographischer Strukturierung. In den Dünnschichtprozessen können Chrom/Chromoxid als gut haftende und strukturierbare Materialien verwendet werden.

Mit diesen Prozessen sind Gitterkonstanten im Bereich von 1 bis 5 μm möglich, so daß bei einer Größe der Bildebene 4 des CCD-Bildaufnahmesensors 1 von etwa 10 x 10 mm² eine Gitterlinienzahl von 2000 bis 10000 erreicht wird, von denen in Fig. 1 zur Vereinfachung nur einige gezeichnet sind.

Die Anzahl der Gitterlinien 9 ist wesentlich größer als die Anzahl der Spalten 6 des CCD-Bildaufnahmesensors 1, um eine kleine Gitterkonstante für das Referenzgitter 8 zu erhalten und unerwünschte Moiré-Erscheinungen durch Überlagerung des Referenzgitters 8 mit dem Gitter aus den Spalten 6 des Bildaufnahmesensors 1 zu vermeiden. Hierfür sind drei Gitterlinien 9 pro Bildpunkt 5 in den Spalten 6 des Bildaufnahmesensors 1 ausreichend, wobei das Referenzgitter 8 zur Erhöhung dieser Zahl vorzugsweise diagonal zu den Spalten 6 des Bildaufnahmesensors 1 aufgebracht sind. Die genannten Moiré-Erscheinungen treten jedoch bei beliebigem Winkel des Referenzgitters 8 zu den Spalten 6 des CCD-Bildaufnahmesensors 1 auf.

Fig. 2 zeigt eine CCD-Kamera 10, in die der CCD-Bildaufnahmesensor 1 in der Bildebene der Kamera eingebaut ist. Die Qualität des Objektives 11 der CCD-Kamera 10 begrenzt durch seine laterale Auflösung bei der Abbildung des Objektgitters auf das Referenzgitter 8 die maximal nutzbare Zahl von Linien, die im Bereich von 20 Gitterlinien pro Bildpunkt 5 in den Spalten 6 des CCD-Bildaufnahmesensors 1 liegen.

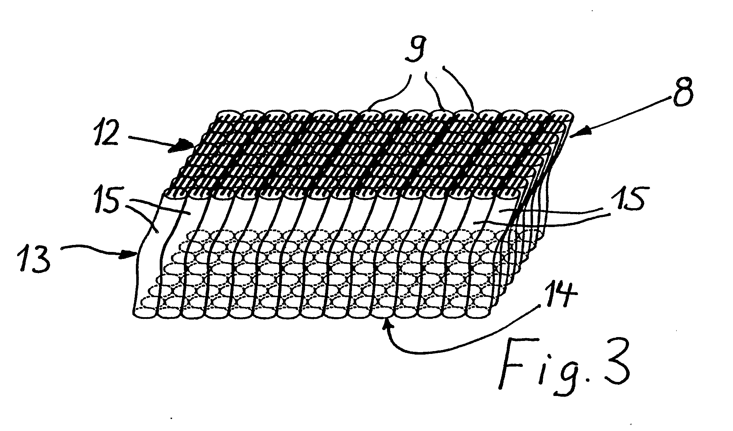

Um die Vorteile einer einzigen Abbildung zu nutzen, muß sich das Referenzgitter 8 in optisch unmittelbarer Nähe der Bildebene 4 befinden, in der die Moiré-Linien zur Verarbeitung aufgenommen werden. Dieses Problem kann nach Fig. 3 gemäß einem zweiten Ausführungsbeispiel auch so gelöst werden, daß das Referenzgitter 8 auf die Eintrittsebene 12 eines Bildleiters 13 aufgebracht wird, dessen Rückseite 14 in direktem Kontakt zu einem üblichen CCD-Bildaufnahmesensor 1 steht. Fig. 3 zeigt den Ausschnitt des Bildleiters 13, dessen Länge von der Einfallsebene 12 zur Rückseite 14 beliebig sein darf.

Zusätzlich zu der Bedingung, daß die Anzahl der Gitterlinien 9 größer als die Anzahl der Spalten 6 des CCD-Bildaufnahmesensors 1 sein muß, muß der Bildleiter 13 derart gewählt sein, daß die Anzahl der Übertragungsfasern 15 größer als die Zahl der Bildpunkte 5 des CCD-Bildaufnahmesensors 1 ist. Die Herstellung des Referenzgitters 8 geschieht nach dem im ersten Ausführungsbeispiel genannten Verfahren, wobei hier der Vorteil besteht, daß nicht in den Herstellungsprozeß des CCD-Bildaufnahmesensors 1 eingegriffen zu werden braucht.

Die Gitterlinien 9 des Referenzgitters 8 sind aus zeichnerischen Gründen in den Fig. 1 und 3 als parallele Linien mit Zwischenräumen der gleichen Breite schematisch dargestellt worden. Das insoweit angedeutete Rechteckamplitudengitter kann auch durch ein sinusförmiges Gitter oder durch ein einer anderen zwischen 0 % und 100 % in der Transparenz verlaufenden Funktion folgendes Gitter ersetzt werden. Die Gitterlinien 9 können auch in Längsrichtung entlang der Gitterebene gekrümmt sein. Ferner kann das Verhältnis des Abstandes der Gitterlinien zu ihrer Breite auch ungleich 1 : 1 gewählt werden. Dann können Höhenmessungen von gekrümmten Oberflächen durch die Erzeugung einfacherer Moiré-Bilder verbessert werden.

## Ansprüche

1. Kamera zur Erfassung der Topographie einer Prüflingsoberfläche durch Erzeugen eines Moiré-Bildes mit Hilfe eines auf dem Objekt aufgebrachten Objektgitters und eines der Kamera zugeordneten Referenzgitters, **dadurch gekennzeichnet,** daß das Referenzgitter (8) ohne Zwischenabbildungsoptik unmittelbar auf die Lichteintrittsfläche (4, 12) des lichtempfindlichen Bildsensors (1) als physikalische Gitterstruktur aufgebracht ist.

2. Kamera nach Anspruch 1, **dadurch gekennzeichnet,** daß die Kamera einen CCD-Bildaufnahmesensor (1) mit einer Vielzahl von Bildpunkten (5) in einer Bildebene (4) aufweist, auf die das Referenzgitter (8) in Gestalt einer Vielzahl von transparenten und nichttransparenten Streifen (9) aufgebracht ist.

3. Kamera nach Anspruch 2, **dadurch gekennzeichnet,** daß die Streifen (9) parallel oder schräg zu den Spalten (6) des CCD-Bildaufnahmesensors (1) verlaufen.

4. Kamera nach Anspruch 2 oder 3, **dadurch gekennzeichnet,** daß die Zahl der Streifen (9) ein Vielfaches der Zahl der Spalten (6) beträgt.

5. Kamera nach Anspruch 1, **dadurch gekennzeichnet,** daß die Kamera einen CCD-Bildaufnahmesensor (1) mit einer Vielzahl von Bildpunkten (5) in einer Bildebene (4) aufweist, die direkt mit der Rückseite (14) eines Bildleiters (13) gekoppelt ist, auf dessen Eintrittsebene (12) das Referenzgitter (8) in Gestalt einer Vielzahl von transparenten und nichttransparenten Streifen (9) aufgebracht ist.

6. Kamera nach Anspruch 5, **dadurch gekennzeichnet,** daß jedem Bildpunkt (5) wenigstens eine Übertragungsfaser (15) des Bildleiters (13) zugeordnet ist.

7. Kamera nach Anspruch 6, **dadurch gekennzeichnet,** daß jeder Übertragungsfaser (15) des Bildleiters (13) mehrere Streifen (9) des Referenzgitters (8) zugeordnet sind.

8. Kamera nach einem der Ansprüche 2 bis 7, **dadurch gekennzeichnet,** daß das Referenzgitter (8) in einem Dünnschichtprozeß durch Aufdampfen oder Sputtern mit nachfolgenden photolithographischen Prozessen zur Strukturierung hergestellt ist.

EP 0 343 366 A1

Fig. 2

Fig. 1

Fig. 3

EP 0 343 366 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 272 196 (INDEBETOUW) <br> * Spalte 3, Zeilen 42-53; Figuren * <br> --- | 1,5 | G 01 B 11/24 |
| A | OPTICS AND LASER TECHNOLOGY, Band 16, Nr. 6, Dezember 1984, Seiten 315-319, Butterworth & Co. (Publishers) Ltd, Guildford, Surrey, GB; G.T. REID et al.: "Absolute and comparative measurements of three-dimensional shape by phase measuring moiré topography" <br> * Insgesamt * <br> --- | 1 | |
| A | APPLIED OPTICS, Band 24, Nr. 11, Juni 1985, Seiten 1565-1566, New York, US; M. CETICA et al.: "Moire with one grating and a photodiode array" <br> * Insgesamt * <br> --- | 1 | |
| A | DE-A-3 638 525 (K. KREYENBERG) <br> * Insgesamt * <br> --- | 1 | |
| A | OPTICS COMMUNICATIONS, Band 34, Nr. 2, August 1980, Seiten 167-170, Amsterdam, NL; LOHMANN: "Computer generated moire" <br> * Insgesamt * <br> ----- | 1 | RECHERCHIERTE SACHGEBIETE (Int. Cl.4) <br><br> G 01 B 11 <br> G 02 B 27 |

Der vorliegende Recherchenbericht wurde für alle Patentansprüche erstellt

| Recherchenort | Abschlußdatum der Recherche | Prüfer |
|---|---|---|
| DEN HAAG | 08-09-1989 | RAMBOER P. |